# EUROPEAN PATENT APPLICATION

(11) **EP 4 819 353 A1**
(43) Date of publication of application: **07.10.2026**
(21) Application number: 24897065.9
(22) Date of filing: 27.09.2024
(51) Int. Cl.: H01M 50/489, H01G 11/78, H01M 10/04, H01M 10/0585, H01M 50/105, H01M 50/131, H01M 50/184, H01M 50/198, H01M 50/483

(54) **ELECTRIC POWER STORAGE MODULE**

(30) Priority: 27.11.2023 JP 2023199715
(71) Applicant: KABUSHIKI KAISHA TOYOTA JIDOSHOKKI, Kariya-shi, Aichi 448-8671 (JP)
(72) Inventor: YAMADA, Masahiro, Kariya-shi, Aichi 448-8671 (JP); NAKAMURA, Tomohiro, Kariya-shi, Aichi 448-8671 (JP); HIROSE, Takayuki, Kariya-shi, Aichi 448-8671 (JP)
(74) Representative: TBK
(86) International application number: PCT/JP2024/034604
(87) International publication number: WO 2025/115375

(57) **Abstract**

This electric power storage module is provided with: an electrode laminate in which electrodes are laminated in a first direction; a sealing body that is provided to the electrode laminate in a manner so as to surround the electrode laminate when viewed in the first direction; an exterior pack that accommodates the electrode laminate and the sealing body; and a cover member that is interposed between the exterior pack and a side surface of the sealing body extending in the first direction. The linear expansion coefficient of the cover member is smaller than the linear expansion coefficient of the sealing body.

## Description

### TECHNICAL FIELD

The present disclosure relates to a power storage module.

### BACKGROUND ART

Patent Literature 1 discloses a power storage device. The power storage device has: an electrode stack formed by stacking a plurality of bipolar electrodes; and an exterior body for sealing the electrode stack in a reduced pressure state. The electrode stack includes a sealing member made of a resin material.

### CITATION LIST

### Patent Literature

Patent Literature 1: Japanese Patent Application Publication No. 2019-087397

### SUMMARY OF INVENTION

### Technical Problem

When a bipolar battery including a sealing member (sealing body) made of a resin material is covered with an exterior pack, the sealing member and the exterior pack may expand and contract in response to a temperature change. Since the resin sealing member exhibits a large thermal expansion, the sealing member may come into contact with the exterior pack, which may lead to damage to the exterior pack.

The present disclosure provides a power storage module that is capable of suppressing damage to an exterior pack caused by thermal expansion of a sealing body due to a temperature change.

### Solution to Problem

A power storage module according to one aspect of the present disclosure includes: an electrode stack in which a plurality of electrodes is stacked in a first direction, the electrodes each including a current collector; a sealing body disposed on the electrode stack so as to surround the electrode stack when viewed from the first direction, the sealing body sealing a plurality of internal spaces each formed between the electrodes adjacent in the first direction; an exterior pack that accommodates the electrode stack and the sealing body; and a cover member interposed between a side surface of the sealing body extending in the first direction and the exterior pack. A linear expansion coefficient of the cover member is smaller than a linear expansion coefficient of the sealing body.

In the above-described power storage module, the cover member, which has a linear expansion coefficient smaller than that of the sealing body, is disposed between the sealing body and the exterior pack, thereby reducing the influence of the sealing body on the exterior pack. That is, since the linear expansion coefficient of the cover member is smaller than the linear expansion coefficient of the sealing body, the difference in the thermal expansion coefficient between the cover member and the exterior pack is smaller than the difference in the thermal expansion coefficient between the sealing body and the exterior pack. Accordingly, when a temperature change occurs in the power storage module, the influence of the expansion of the cover member on the generation of stress in the exterior pack is relatively small. This allows damage to the exterior pack, which is caused by thermal expansion of the sealing body due to a temperature change, to be suppressed.

The cover member in one example may contain a resin material and a filler, and a linear expansion coefficient of the filler may be lower than a linear expansion coefficient of the resin material.

The cover member may extend along a second direction intersecting the first direction. The filler may be an inorganic material having a needle-like or fibrous shape, and be oriented along the second direction within the cover member.

In one example, a linear expansion coefficient of the external pack may be lower than a linear expansion coefficient of the cover member. The linear expansion coefficient of the cover member may be closer to the linear expansion coefficient of the exterior pack than to the linear expansion coefficient of the sealing body.

The difference between the linear expansion coefficient of the cover member and the linear expansion coefficient of the exterior pack in one example may be 2.5 × 10⁻⁵ [1/°C] or less.

### Advantageous Effects of Invention

The present disclosure provides a power storage module that is capable of suppressing damage to an exterior pack caused by thermal expansion of a sealing body due to a temperature change.

### BRIEF DESCRIPTION OF DRAWINGS

[FIG. 1] FIG. 1 is a schematic exploded perspective view illustrating one example of a power storage module.
[FIG. 2] FIG. 2 is a schematic cross-sectional view illustrating one example of the power storage module.
[FIG. 3] FIG. 3 is a schematic view illustrating one side of a module main body of one example of the power storage module.
[FIG. 4] FIG. 4 is a cross-sectional view, taken along line IV-IV of FIG 3.
[FIG. 5] FIG. 5 is a perspective view illustrating one example of a cover member.
[FIG. 6] FIG. 6 is a plan view for describing one example of the cover member.
[FIG. 7] FIG. 7 is a partially enlarged view of FIG. 6.

### DESCRIPTION OF EMBODIMENTS

The following will describe an embodiment with reference to the drawings. In the description of the drawings, the same reference signs are used for the same or equivalent parts, and the repeated descriptions may be omitted. The following description may refer to a Cartesian coordinate system defined by the X axis, the Y axis, and the Z axis in the drawings.

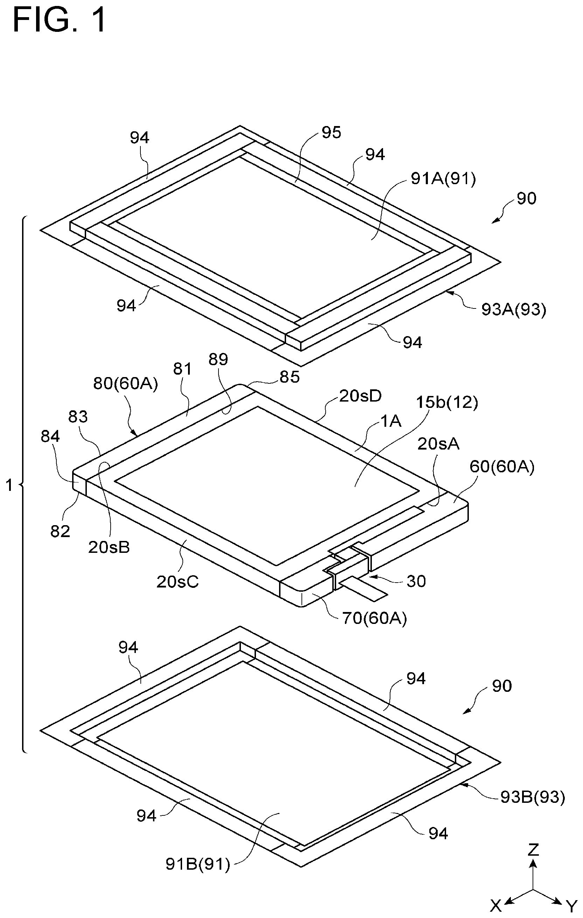

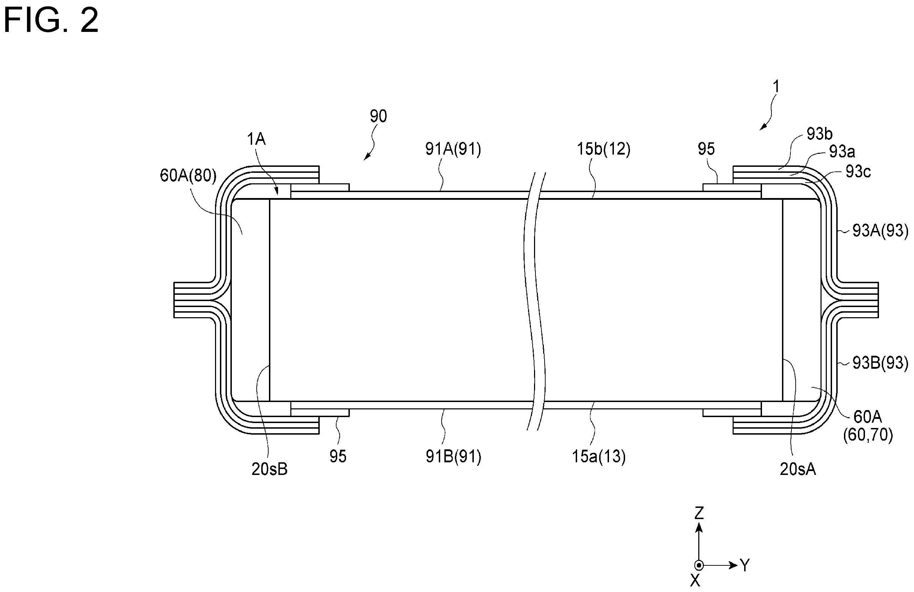

FIG. 1 is a schematic exploded perspective view of a power storage module according to the present embodiment. FIG. 2 is a schematic cross-sectional view of the power storage module in the Y-Z plane. FIG. 2 schematically illustrates a module main body 1A included in a power storage module 1. The power storage module 1 is, for example, used in a battery for various vehicles, such as a forklift truck, a hybrid vehicle, and an electric vehicle. The power storage module 1 is, for example, a secondary battery, such as a nickel-metal hydride secondary battery or a lithium-ion secondary battery. The power storage module 1 may be an electrical double layer capacitor or an all-solid-state battery. In the present embodiment, as one example, the power storage module 1 is a lithium-ion secondary battery.

The power storage module 1 includes a module main body 1A, a cover member 60A, a connector unit 30, and an exterior pack 90. FIG. 1 illustrates the module main body 1A and the exterior pack 90 of the power storage module 1 in an exploded state. FIG. 2 illustrates the module main body 1A accommodated in the exterior pack 90. The module main body 1A has a rectangular shape when viewed from the Z-axis direction (first direction), and has four outer side surfaces 20s extending in the Z-axis direction. The outer side surfaces 20s include outer side surfaces 20sA and 20sB that face each other in the Y-axis direction (third direction) and outer side surfaces 20sC and 20sD that face each other in the X-axis direction (second direction). The module main body 1A has opposite end surfaces in the Z-axis direction, which are respectively formed by a positive terminal electrode 12 and a negative terminal electrode 13 as described later, and are used to supply power.

The cover member 60A in one example includes a first cover member 60, a second cover member 70, and a third cover member 80. The first cover member 60 and the second cover member 70 are arranged so as to cover the outer side surface 20sA (first side surface) when viewed from the Y-axis direction (third direction). The third cover member 80 is arranged so as to cover the outer side surface 20sB (second side surface) when viewed from the Y-axis direction. The connector unit 30 is disposed between the first cover member 60 and the second cover member 70 in the X-axis direction (second direction).

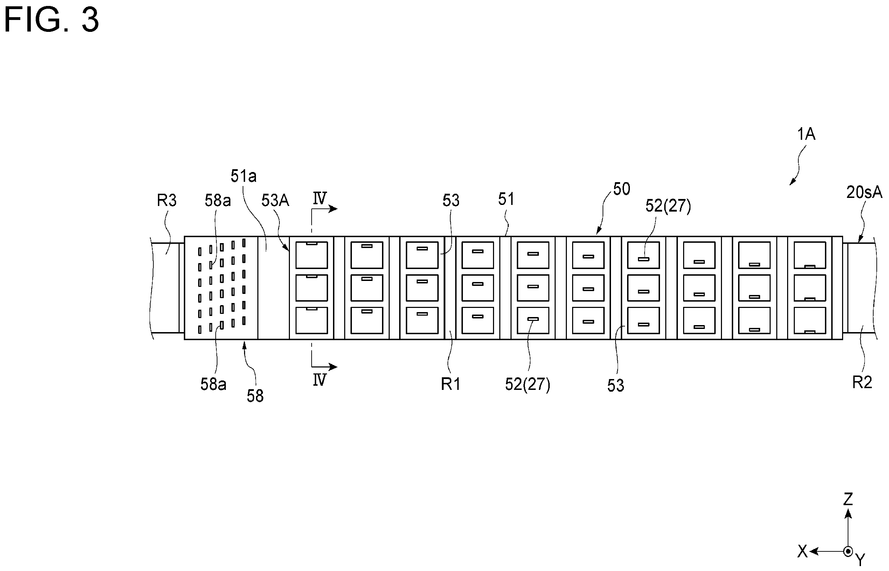

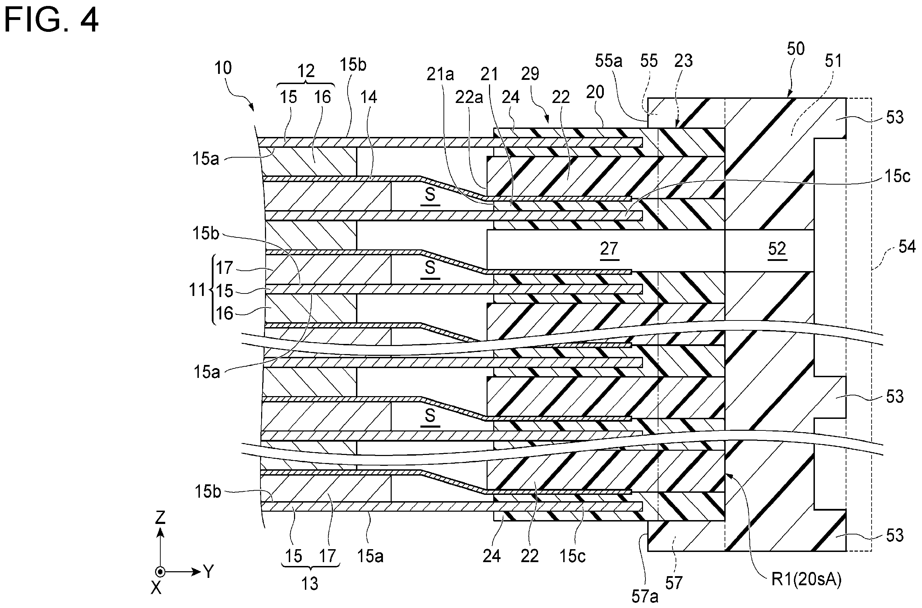

FIG. 3 is a schematic view of the outer side surface 20sA of the module main body 1A. FIG. 4 is a schematic cross-sectional view of the module main body 1A in one example. FIG. 4 illustrates a cross-sectional, taken along line IV-IV of FIG 3. The outer side surface 20sA of the module main body 1A includes an area R1 where an additional member 50, which will be described later, is provided; and areas R2 and R3 that are adjacent to the area R1. In the example illustrated in FIG. 3, the area R2 is located on the negative side of the area R1 in the X-axis direction, and the area R3 is located on the positive side of the area R1 in the X-axis direction. The additional member includes an electrolyte injection port portion 53A through which electrolyte is injected into the module main body 1A. Accordingly, in the description, the outer side surface 20sA may be referred to as an electrolyte injection port surface.

As illustrated in FIG. 4, the module main body 1A includes an electrode stack 10 and a sealing body 29 that surrounds the electrode stack 10 when viewed from the Z-axis direction. The electrode stack 10 includes a plurality of electrodes stacked in the Z-axis direction. The Z-axis direction is the stacking direction of the electrodes, and is the height direction of the power storage module 1. The plurality of electrodes includes a plurality of bipolar electrodes 11, the positive terminal electrode 12, and the negative terminal electrode 13. Separators 14 are each interposed between the electrodes adjacent to each other.

Each of the bipolar electrodes 11 has a current collector 15, a positive electrode active material layer 16, and a negative electrode active material layer 17. The current collector 15 has a rectangular shape when viewed from the Z-axis direction, and is in the form of a sheet. The active material layers (the positive electrode active material layer 16 and the negative electrode active material layer 17) are disposed at the center of the current collector 15 when viewed from the Z-axis direction, and are not disposed on a peripheral edge portion 15c of the current collector 15. The positive electrode active material layer 16 is provided on a first surface 15a of the current collector 15. The negative electrode active material layer 17 is provided on a second surface 15b of the current collector 15. The second surface 15b of the current collector 15 faces one direction along the Z-axis direction (one side where the positive terminal electrode 12 is disposed in FIG. 4), and the first surface 15a of the current collector 15 faces the other direction along the Z-axis direction (the other side where the negative terminal electrode 13 is disposed in FIG. 4). The bipolar electrodes 11 are stacked so that the positive electrode active material layer 16 of one of the bipolar electrodes 11 adjacent to each other in the stacking direction faces the negative electrode active material layer 17 of the other of the bipolar electrodes 11 adjacent to each other in the stacking direction.

The positive terminal electrode 12 includes the current collector 15 and the positive electrode active material layer 16 provided on the first surface 15a of the current collector 15. No active material layer is provided on the second surface 15b of the current collector 15 of the positive terminal electrode 12. The positive terminal electrode 12 is stacked on the bipolar electrodes 11 disposed at one end of the electrode stack 10 in the Z-axis direction. The positive terminal electrode 12 is stacked on the bipolar electrodes 11 so that the positive electrode active material layer 16 faces the negative electrode active material layer 17.

The negative terminal electrode 13 includes the current collector 15 and the negative electrode active material layer 17 provided on the second surface 15b of the current collector 15. No active material layer is provided on the first surface 15a of the current collector 15 of the negative terminal electrode 13. The negative terminal electrode 13 is stacked on the bipolar electrodes 11 disposed at the other end of the electrode stack 10 in the Z-axis direction, which is on the side opposite to the side where the positive terminal electrode 12 is disposed. The negative terminal electrode 13 is stacked on the bipolar electrodes 11 so that the negative electrode active material layer 17 faces the positive electrode active material layer 16. In the present embodiment, the current collectors of the bipolar electrodes 11, the positive terminal electrode 12, and the negative terminal electrode 13 are designated by the same reference numeral 15, but the current collectors of the bipolar electrodes 11, the positive terminal electrode 12, and the negative terminal electrode 13 may be the same as or different from one another.

Each of the separators 14 is disposed between the adjacent bipolar electrodes 11, between the positive terminal electrode 12 and the bipolar electrode 11, and between the negative terminal electrode 13 and the bipolar electrode 11. The separator 14 is interposed between the positive electrode active material layer 16 and the negative electrode active material layer 17 to separate the positive electrode active material layer 16 from the negative electrode active material layer 17. The separator 14 prevents short circuits caused by contact between the adjacent electrodes while allowing charge carriers, such as lithium ions, to pass through the separator 14.

The current collectors 15 are chemically inactive electrical conductors through which current is continued to flow to the positive electrode active material layer 16 and the negative electrode active material layer 17 during charging or discharging of the lithium-ion secondary battery. Examples of the material of the current collectors 15 include a metal material, a conductive resin material, and a conductive inorganic material. Examples of the conductive resin material include resin in which conductive filler is added to conductive polymer or non-conductive polymer, as necessary. Each of the current collectors 15 may include multiple layers. In this case, each layer of the current collector 15 may contain the above-described metal material or the conductive resin material.

The current collector 15 may have a coating layer on its surface. The coating layer may be formed by a well-known method, such as plating or spray coating, for example. The current collector 15 may be formed in, for example, a plate shape, a foil shape (e.g., a metal foil), a film shape, or a mesh shape. Examples of the metal foil include an aluminum foil, a copper foil, a nickel foil, a titanium foil, and a stainless foil. The current collector 15 may be an alloy foil or a clad foil made of the above-described metals. When the current collector 15 is in the form of a foil, the thickness of the current collector 15 may be, for example, 1 µm to 100 µm. In the present embodiment, the current collector 15 is an integrated foil comprising an aluminum foil and a copper foil, or is an aluminum foil.

The positive electrode active material layer 16 contains a positive electrode active material that is capable of absorbing and desorbing charge carriers, such as lithium-ions. Examples of the positive electrode active material include a lithium composite metal oxide having a layered rock salt structure, a metal oxide having a spinel structure, and a polyanionic compound. The positive electrode active material may be any material that is used in lithium-ion secondary batteries. The positive electrode active material layer 16 may contain a plurality of positive electrode active materials. In the present embodiment, the positive electrode active material layer 16 contains olivine type lithium iron phosphate (LiFePO₄) as a complex oxide.

The negative electrode active material layer 17 contains a negative electrode active material that is capable of absorbing and desorbing charge carriers, such as lithium-ions. The negative electrode active material may be an element, an alloy, or a compound. Examples of the negative electrode active material include lithium, carbon, and a metal compound. The negative electrode active material may be an element capable of alloying with lithium, or a compound including the element capable of alloying with lithium. Examples of the carbon include natural graphite, artificial graphite, hard carbon (non-graphitizable carbon), and soft carbon (graphitizable carbon). Examples of the artificial graphite include highly oriented graphite and mesocarbon microbeads. Examples of the element capable of alloying with lithium include silicon and tin. In the present embodiment, the negative electrode active material layer 17 contains graphite as a carbon-based material.

Each of the positive electrode active material layer 16 and the negative electrode active material layer 17 (which may be simply referred to the active material layer) may further include a conductive auxiliary agent for increasing electrical conductivity as necessary, a binder agent, an electrolyte (polymer matrix, ion-conducting polymer, electrolyte solution, or the like), supporting salt (lithium salt) for increasing ion conductivity, and the like. The conductive auxiliary agent is added to increase electrical conductivity of the electrodes (the bipolar electrodes 11, the positive terminal electrode 12, and the negative terminal electrode 13). The conductive auxiliary agent is, for example, acetylene black, carbon black, graphite, or the like.

Examples of the binder include fluorine-containing resins, such as polyvinylidene difluoride, polytetrafluoroethylene, and fluorine rubber; thermoplastic resins, such as polypropylene and polyethylene; imide resins, such as polyimide and polyamide-imide; alkoxysilyl group-containing resins; acryl resins, such as acrylic acid and methacrylic acid; styrene-butadiene rubber (SBR); carboxymethyl cellulose; alginates, such as sodium alginate and ammonium alginate; water-soluble cellulose ester cross-link; and starch-acrylic acid graft polymers. These binder agents may be used independently or in combination. Examples of the solvent include water and N-methyl-2-pyrrolidone (NMP).

The separator 14 may be a porous sheet or non-woven fabric that includes polymers for absorbing and holding electrolyte, for example. Examples of the material of the separator 14 include polypropylene, polyethylene, polyolefin, and polyester. The separator 14 may have a single-layer structure or a multi-layer structure. The multi-layer structure may have, for example, a ceramic layer, or the like, as an adhesive layer or a heat resistant layer. The separator 14 may be impregnated with electrolyte. The separator 14 may be made of electrolyte, such as polymer electrolyte or inorganic electrolyte. Examples of the electrolyte with which the separator 14 is impregnated include: liquid electrolyte (electrolyte solution) including non-aqueous solvent and electrolyte salt dissolved in the non-aqueous solvent; and a polymer gel electrolyte including electrolyte held in a polymer matrix.

As the electrolyte salt in the electrolyte solution with which the separator 14 is impregnated, a known lithium salt, such as LiClO₄, LiAsF₆, LiPF₆, LiBF₄, LiCF₃SO₃, LiN(FSO₂)₂, or LiN(CF₃SO₂)₂, may be used. The non-aqueous solvent may be a known solvent, such as cyclic carbonates, cyclic esters, chain carbonates, chain esters, or ethers. Note that two or more of these known solvent materials may be used in combination.

The sealing body 29 includes a sealing main body 20 and the additional member 50. The sealing main body 20 is formed in a frame shape on the periphery of the electrode stack 10 so as to surround the periphery of the electrode stack 10 when viewed from the Z-axis direction. The sealing main body 20 may be joined to the first surface 15a and the second surface 15b of the current collector 15 at a peripheral edge portion 15c of the current collector 15. The sealing main body 20 may form internal spaces S between the current collectors 15 adjacent to each other in the Z-axis direction, and may seal each of the internal spaces S. In the present embodiment, each of the internal spaces S accommodates electrolyte solution (not illustrated). That is, the sealing main body 20 cooperates with the current collectors 15 adjacent to each other in the Z-axis direction to define each internal space S in which the electrolyte is accommodated. The sealing main body 20 may prevent the electrolyte solution accommodated in the internal spaces S from leaking out to the outside.

The sealing main body 20 is capable of suppressing ingress and egress of air, moisture, and the like between the outside of the electrode stack 10 and the internal spaces S. The sealing main body 20 is capable of suppressing, for example, leakage of gas, which has been generated from the electrodes due to a charge and discharge reaction or the like, to the outside of the module main body 1A. The edge of the separator 14 is joined to the sealing main body 20. The sealing main body 20 includes an electrical insulating material. Examples of a resin material for the sealing main body 20 include various resin materials, such as polypropylene, polyethylene, polystyrene, ABS resin, acid-modified polypropylene, acid-modified polyethylene, and acrylonitrile-styrene resin.

The sealing main body 20 in one example includes a plurality of sealing members 21, a pair of end sealing members 24, and a plurality of spacers 22. The sealing members 21, the end sealing members 24, and the spacers 22 may be frame-like members formed in a sheet shape. The sealing main body 20 also has a welded end portion 23. Each of the sealing members 21 has a frame shape when viewed from the Z-axis direction, and is provided along the peripheral edge portion 15c of the current collector 15. The sealing member 21 extends from the first surface 15a of the current collector 15 through the end surface to the second surface 15b of the current collector 15 so as to cover the peripheral edge portion 15c. That is, the sealing member 21 has, respectively on the first surface 15a and the second surface 15b of the current collector 15, an inner portion overlapping the current collector 15 when viewed from the Z direction and an outer portion located outside the edge of the current collector 15, and the current collector 15 is held between the outer portions of the adjacent sealing members 21, which are connected to each other. The sealing member 21 may be welded to at least one of the first surface 15a and the second surface 15b of the current collector 15. The sealing member 21 according to the present embodiment is welded to both the first surface 15a and the second surface 15b of the current collector 15.

Each of the end sealing members 24 has a frame shape when viewed from the Z-axis direction, and is provided along the peripheral edge portion 15c of the current collector 15 that forms the positive terminal electrode 12 or the negative terminal electrode 13. Accordingly, the end sealing members 24 are arranged so that the sealing members 21 are held between the end sealing members 24 in the Z-axis direction. Each of the end sealing members 24 may be welded to at least one of the first surface 15a and the second surface 15b of the current collector 15. The end sealing member 24 according to the present embodiment is welded to both the first surface 15a and the second surface 15b of the current collector 15.

Each of the spacers 22 has a frame shape when viewed from the Z-axis direction, and is disposed along the peripheral edge portion 15c of the current collector 15. The spacer 22 is interposed between the sealing members 21 adjacent to each other in the Z-axis direction. Also, the spacer 22 is interposed between the sealing member 21 and the end sealing member 24 adjacent to each other in the Z-axis direction. The spacer 22 is capable of maintaining a distance between the current collectors 15 adjacent to each other in the Z-axis direction. That is, the spacers 22, the sealing members 21, and the end sealing members 24 define the internal spaces S each between the adjacent current collectors 15.

The welded end portion 23 is formed by welding together and integrating the ends of the sealing members 21, the pair of end sealing members 24, and the spacers 22 on the opposite side to the internal spaces S. The welded end portion 23 has a frame shape so that the welded end portion 23 surrounds the electrode stack 10 when viewed from the Z-axis direction. The side surfaces of the welded end portion 23 opposite to the internal spaces S extend along the Z-axis direction and form the outer side surfaces 20s of the sealing main body 20. In other words, the sealing main body 20 includes the outer side surfaces 20s opposite to the internal spaces S. Each of the outer side surfaces 20s may be a flat surface.

The sealing main body 20 has a plurality of communication holes 27 that are in communication with the plurality of internal spaces S, respectively. As an example, each of the communication holes 27 is a slot of the spacer 22 and is formed through the welded end portion 23. Each of the communication holes 27 opens to the internal space S at one end thereof, and opens in the outer side surface 20s of the sealing main body 20 at the other end thereof. In the illustrated example, the communication hole 27 opens in the outer side surface 20sA.

The additional member 50 is provided so as to overlap the area R1 of the outer side surface 20sA where the communication holes 27 are formed. The additional member 50 is formed into a predetermined shape to provide the electrolyte injection port portion 53A having a plurality of electrolyte injection ports respectively in communication with the plurality of communication holes 27. The additional member 50 is joined to the welded end portion 23. For example, the additional member 50 is integrally joined to the welded end portion 23 by injection molding. The additional member 50 in one example includes a main body 51, a first overhanging portion 55, and a second overhanging portion 57.

The main body 51 partially covers the outer side surface 20sA. For example, the main body 51 covers the outer side surface 20sA so as to cover the area R1 where the communication holes 27 are formed in the outer side surface 20sA. As described above, the communication holes 27 are in communication with the internal spaces S, respectively. In the example illustrated in FIG. 3, thirty communication holes 27, which correspond to the thirty internal spaces formed between the current collectors 15, respectively, are arranged discretely in the X-axis direction and the Z-axis direction. More specifically, from the positive terminal electrode 12 side, the communication holes 27 corresponding to the first to tenth internal spaces are arranged at equal intervals along the X-axis direction, and the communication holes 27 corresponding to the eleventh to twentieth internal spaces and the communication holes 27 corresponding to the twenty-first to thirtieth internal spaces are arranged in order along the Z-axis direction below the first to tenth the internal spaces. The main body 51 extends in a rectangular shape along the X-axis direction and the Z-axis direction to cover the area R1 where the thirty communication holes 27 are formed.

The main body 51 has a rectangular plate shape and has a predetermined thickness in the Y-axis direction. The main body 51 has openings 52 at positions corresponding to the communication holes 27. The main body 51 also has a projecting frame portion 53 that extends from the outer side surface 20sA in the Y-axis direction, which intersects (is perpendicular to) the outer side surface 20sA. The projecting frame portion 53 surrounds the openings 52 when viewed from the Y-axis direction, and serves as a partition wall that separates the openings 52. In the example of FIG. 3, ten projecting frame portions 53 are arranged in the X-axis direction, each having three spaces for separating three openings 52 arranged vertically.

Each of the projecting frame portions 53 is used, for example, when an electrolyte is injected into each of the internal spaces S. For example, when the electrolyte is injected, a nozzle of an injection device is brought into close contact with the top surface of the projecting frame portion 53, and the electrolyte is introduced into the space of the projecting frame portion 53 from the nozzle. This allows the electrolyte to be injected into the internal space S through the opening 52 and the communication hole 27. A laminate sheet 54 for sealing the projecting frame portion 53 after the electrolyte is injected may be provided on the projecting frame portion 53. The laminate sheet 54 may be a sheet including a metal layer, such as an aluminum layer, covered with a resin layer. The laminate sheet 54 may be fused to the top surface of the projecting frame portion 53, for example.

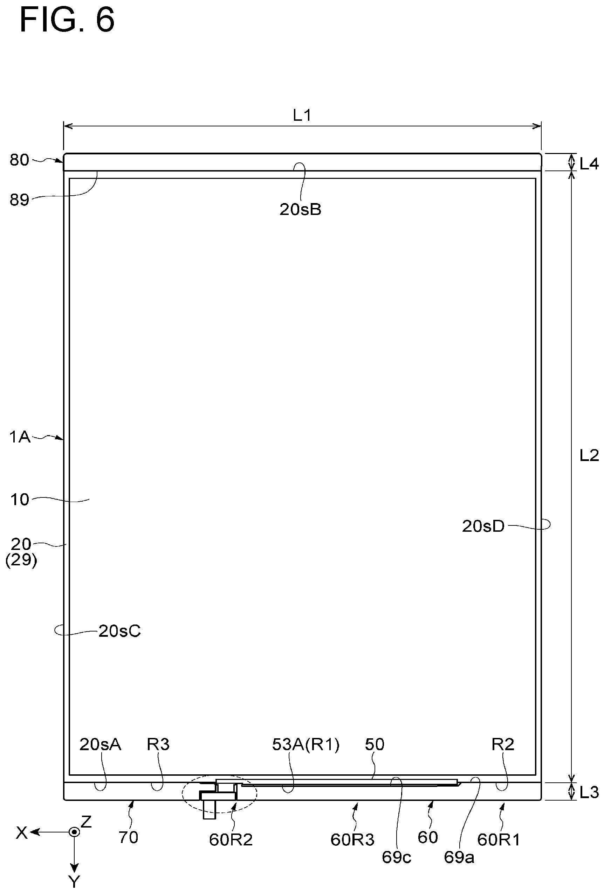

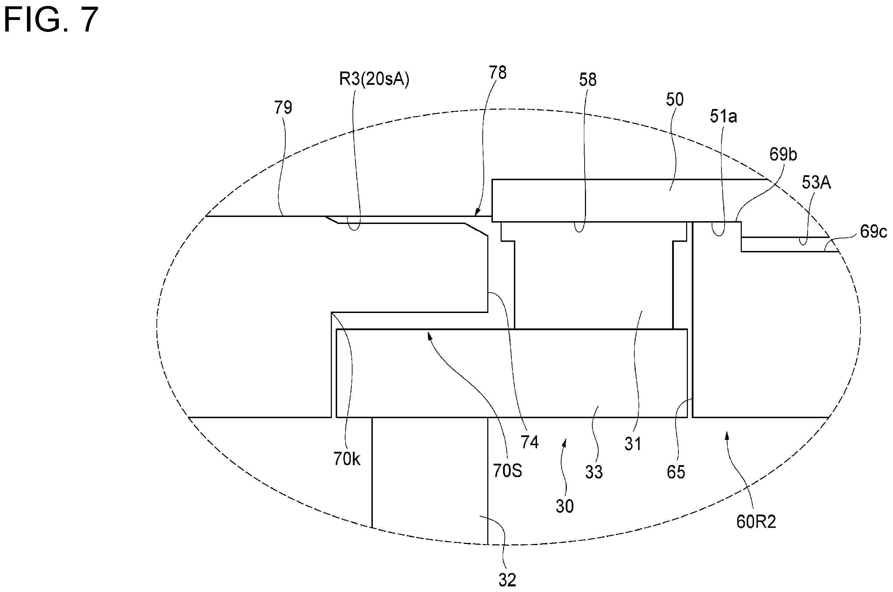

In one example, the main body 51 includes a terminal portion 58 for voltage detection. The terminal portion 58 is formed in the main body 51 at a position shifted toward the positive side, in the X-axis direction, with respect to the electrolyte injection port portion 53A formed by the projecting frame portions 53. For example, the terminal portion 58 is adjacent to the projecting frame portion 53, which is formed at an end on the positive side in the X-axis direction, via a flat surface 51a. In one example, the terminal portion 58 is provided at the end of the main body 51 on the positive side in the X-axis direction. The terminal portion 58 provides a plurality of terminals 58a electrically connected to the plurality of current collectors 15, respectively. One end of each terminal 58a is connected to the corresponding current collector 15, and the other end of the terminal 58a is exposed from the main body 51. The terminal 58a may be, for example, a metal pin as long as it is electrically connected to the current collector 15. The connector unit 30 is fixed to the terminal portion 58 (see FIGS. 6 and 7). The connector unit 30 in one example includes a housing 31 having a plurality of contacts connected to the plurality of terminals 58a, and an FPC connector 33 for connecting the plurality of contacts to a flexible printed circuit (FPC) 32.

The first overhanging portion 55 and the second overhanging portion 57 are connected to both ends of the main body 51 in the Z-axis direction. The first overhanging portion 55 partially covers one edge of the welded end portion 23 in the Z-axis direction (positive side in the Z-axis direction). For example, the first overhanging portion 55 partially covers the end sealing member 24 joined to the positive terminal electrode 12. In the illustrated example, an edge 55a of the first overhanging portion 55 extends from the edge of the welded end portion 23 to a position outside an inner edge 22a of the spacer 22 and an inner edge 21a of the sealing member 21 when viewed from the Z-axis direction, but the configuration is not limited thereto. The first overhanging portion 55 may have a rectangular plate shape having the same length as the main body 51 in the X-axis direction.

The second overhanging portion 57 partially covers the other edge of the welded end portion 23 in the Z-axis direction (negative side in the Z-axis direction). For example, the second overhanging portion 57 partially covers the end sealing member 24 joined to the negative terminal electrode 13. In the illustrated example, an edge 57a of the second overhanging portion 57 extends from the edge of the welded end portion 23 to a position outside the inner edge 22a of the spacer 22 and the inner edge 21a of the sealing member 21 when viewed from the Z-axis direction, but the configuration is not limited thereto. The second overhanging portion 57 may have a rectangular plate shape having the same length as the main body 51 in the X-axis direction.

Reference is again made to FIGS. 1 and 2. The exterior pack 90 accommodates the module main body 1A, the cover member 60A, and the connector unit 30. The exterior pack 90 in one example includes a conductive member 91 and an exterior film 93. The conductive member 91 includes a first conductive member 91A and a second conductive member 91B each having a rectangular sheet shape. The first conductive member 91A is in contact with the second surface 15b of the current collector 15 of the positive terminal electrode 12 so as to be electrically connected to the positive terminal electrode 12. The second conductive member 91B is in contact with the first surface 15a of the current collector 15 of the negative terminal electrode 13 so as to be electrically connected to the negative terminal electrode 13. The conductive member 91 may be, for example, a metal foil, such as an aluminum foil. The planar size of the conductive member 91 may be equal to or smaller than that of the current collector 15.

The exterior film 93 surrounds the outer periphery of the component (here, the module main body 1A, the cover member 60A, and the connector unit 30) when viewed from the Z-axis direction. For example, the exterior film 93 may cover at least the sealing body 29 of the module main body 1A. In the illustrated example, the exterior film 93 includes a first exterior film 93A connected to the first conductive member 91A and a second exterior film 93B connected to the second conductive member 91B. The exterior film 93 has a rectangular frame shape. For example, the exterior film 93 may be formed by welding together four strip-shaped sheets 94 respectively along the four sides of the rectangle. The first exterior film 93A in the illustrated example is deformed so that the outer edge of the first exterior film 93A is positioned closer to the second exterior film 93B than the inner edge of the first exterior film 93A. The second exterior film 93B is deformed so that the outer edge of the second exterior film 93B is positioned closer to the first exterior film 93A than the inner edge of the first exterior film 93B.

The inner edge of the rectangular frame-shaped exterior film 93 is located inside the peripheral edge of the conductive member 91 when viewed from the Z-axis direction. The inner edge of the exterior film 93 overlaps and is joined to the peripheral edge of the conductive member 91. In one example, the inner edge of the exterior film 93 and the periphery of the conductive member 91 may be joined together by a resin material 95. The resin material 95 may be a sealing resin that is a rectangular frame-shape sheet. For example, the inner edge of the rectangular frame-shaped resin material 95 may be located inside the inner edge of the exterior film 93, and the outer edge of the resin material 95 may correspond to the periphery of the conductive member 91.

The outer edge of the exterior film 93 is located outside the periphery of the component when viewed from the Z-axis direction. The outer edge of the first exterior film 93A and the outer edge of the second exterior film 93B are joined together. As an example, the outer edge of the first exterior film 93A and the outer edge of the second exterior film 93B may be welded to each other. The periphery of the conductive member 91 and the inner edge of the exterior film 93 are sealed to each other, and the outer edge of the first exterior film 93A and the outer edge of the second exterior film 93B are sealed to each other, thereby forming a sealed space inside the exterior pack 90. After the module main body 1A and the like are accommodated in the exterior pack 90, the interior of the exterior pack 90 may be sealed in a reduced pressure state. In this case, the exterior pack 90 is pressed by atmospheric pressure, so that the pair of conductive members 91 comes into close contact with the positive terminal electrode 12 and the negative terminal electrode 13, respectively. When the first exterior film 93A and the second exterior film 93B are joined together, the flexible printed circuit 32 is exposed to the outside of the exterior pack 90 from the joining interface between the first exterior film 93A and the second exterior film 93B.

The exterior film 93 may be, for example, a laminate film including a metal layer. That is, the exterior film 93 may be a sheet-like member in which both sides of a metal layer 93a, such as an aluminum layer, are covered with resin layers 93b and 93c.

The cover member 60A is accommodated in the exterior pack 90 together with the module main body 1A and the connector unit 30, and disposed between the outer side surfaces 20s of the module main body 1A and the exterior film 93. That is, the cover member 60A is interposed between the outer side surfaces 20s and the exterior film 93. The power storage module 1 in one example includes the cover member 60A including the first cover member 60 and the second cover member 70 arranged between the outer side surface 20sA of the module main body 1A and the exterior film 93, and the third cover member 80 arranged between the outer side surface 20sB of the module main body 1A and the exterior film 93. The first cover member 60 is disposed on a region of the outer side surface 20sA on the negative side in the X-axis direction with respect to the terminal portion 58. The second cover member 70 is disposed so as to cover a region of the outer side surface 20sA on the positive side in the X-axis direction with respect to the terminal portion 58.

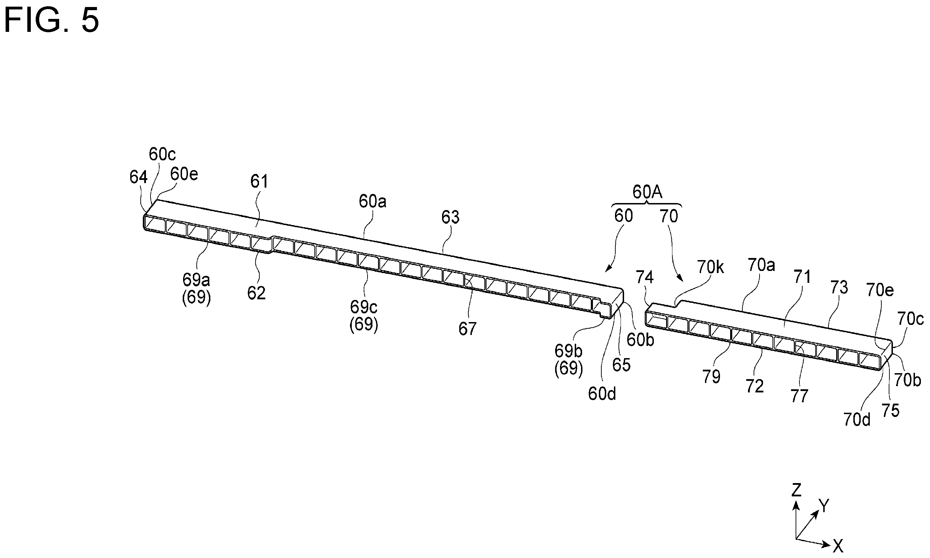

FIG. 5 is a perspective view illustrating the first cover member 60 and the second cover member 70. The first cover member 60 and the second cover member 70 in FIG. 5 are illustrated in a positional relationship between the first cover member 60 and the second cover member 70 accommodated in the exterior pack 90. FIG. 6 is a plan view for explaining the relationship between the first cover member 60, the second cover member 70 and the third cover member 80, and the module main body 1A, without the exterior pack 90. FIG. 7 is a partially enlarged view of FIG. 6.

The first cover member 60 includes a first wall portion 61 and a second wall portion 62 that face each other in the Z-axis direction, and a third wall portion 63 that extends in the X-Z plane to connect the first wall portion 61 and the second wall portion 62. In addition, the first cover member 60 includes a fourth wall portion 64 and a fifth wall portion 65 that extend in the Y-Z plane to connect the first wall portion 61, the second wall portion 62, and the third wall portion 63, and face each other in the X-axis direction.

A connection portion 60a between the first wall portion 61 and the third wall portion 63, a connection portion 60b between the second wall portion 62 and the third wall portion 63, a connection portion 60c between the first wall portion 61 and the fourth wall portion 64, a connection portion 60d between the second wall portion 62 and the fifth wall portion 65, and a connection portion 60e between the third wall portion 63 and the fourth wall portion 64 are chamfered. The connection portions 60a-60e may be chamfered with a radius, for example. That is, the corners formed by connections between the wall portions may be curved in an arc shape when viewed from any of the X-axis direction, the Y-axis direction, and the Z-axis direction.

The hollow interior of the first cover member 60 is provided with one or more reinforcing ribs 67. The ribs 67 each have a plate shape extending along the Y-Z plane, and connect the first wall portion 61, the second wall portion 62, and the third wall portion 63 to one another. The ribs 67 may be arranged at equal intervals in the X-axis direction. As an example, the distance between the adjacent ribs 67 is greater than the distance between the first wall portion 61 and the second wall portion 62 and is less than twice the distance between the first wall portion 61 and the second wall portion 62. The end faces of the first wall portion 61, the second wall portion 62, the fourth wall portion 64, the fifth wall portion 65, and the ribs 67 facing away from the third wall portion 63 form a wall surface 69 opposite to the third wall portion 63.

The first wall portion 61 and the second wall portion 62 each have a first region 60R1 connected to the fourth wall portion 64, a second region 60R2 connected to the fifth wall portion 65, and a third region 60R3 located between the first region 60R1 and the second region 60R2. The first regions 60R1 and the second regions 60R2 have the same length in the Y-axis direction. The third regions 60R3 are shorter than the first regions 60R1 and the second regions 60R2 in the Y-axis direction. In the illustrated example, the positions where the third wall portion 63 is connected to the first wall portion 61 and to the second wall portion 62 are constant in the Y-axis direction. Accordingly, the positions of the wall surface 69 in the third regions 60R3 are closer to the third wall portion 63 in the Y-axis direction than the positions of the wall surface 69 in the first regions 60R1 and the second regions 60R2.

The first regions 60R1 face the area R2 of the outer side surface 20sA. The second regions 60R2 face the flat surface 51a of the additional member 50 provided on the outer side surface 20sA. The third regions 60R3 face the electrolyte injection port portion 53A of the additional member 50 provided on the outer side surface 20sA. In the first regions 60R1, the wall surface 69 of the first cover member 60 serves as a contact surface 69a that is in contact with the area R2 of the outer side surface 20sA. In the second regions 60R2, the wall surface 69 of the first cover member 60 serves as a contact surface 69b that is in contact with the flat surface 51a of the additional member 50. In the third regions 60R3, the wall surface 69 of the first cover member 60 serves as a non-contact surface 69c that is spaced apart from the electrolyte injection port portion 53A of the additional member 50. The non-contact surface 69c is recessed in a direction away from the outer side surface 20sA relative to the contact surfaces 69a and 69b when viewed from the Z-axis direction (i.e., in the opposite direction from the outer side surface 20sA along the Y-axis direction). In the third regions 60R3, a gap is formed between the wall surface 69 of the first cover member 60 and the additional member 50.

The second cover member 70 includes a first wall portion 71 and a second wall portion 72 that face each other in the Z-axis direction, and a third wall portion 73 that extends in the X-Z plane to connect the first wall portion 71 and the second wall portion 72. In addition, the second cover member 70 includes a fourth wall portion 74 and a fifth wall portion 75 that extend in the Y-Z plane to connect the first wall portion 71, the second wall portion 72, and the third wall portion 73 and face each other in the X-axis direction.

A connection portion 70a between the first wall portion 71 and the third wall portion 73, a connection portion 70b between the second wall portion 72 and the third wall portion 73, a connection portion 70c between the third wall portion 73 and the fifth wall portion 75, a connection portion 70d between the second wall portion 72 and the fifth wall portion 75, and a connection portion 70e between the first wall portion 71 and the fifth wall portion 75 are chamfered. The connection portions 70a-70e may be chamfered with a radius, for example. That is, the corners formed by connections between the wall portions may be curved in an arc shape when viewed from any of the X-axis direction, the Y-axis direction, and the Z-axis direction.

The hollow interior of the second cover member 70 is provided with one or more reinforcing ribs 77. The ribs 77 each have a plate shape extending along the Y-Z plane, and connect the first wall portion 71, the second wall portion 72, and the third wall portion 73 to one another. The ribs 77 may be arranged at equal intervals in the X-axis direction. As an example, the distance between the adjacent ribs 77 is greater than the distance between the first wall portion 71 and the second wall portion 72 and is less than twice the distance between the first wall portion 71 and the second wall portion 72. The end faces of the first wall portion 71, the second wall portion 72, the fourth wall portion 74, the fifth wall portion 75, and the ribs 77 facing away from the third wall portion 73 form a wall surface 79 opposite to the third wall portion 73.

The second cover member 70 in the illustrated example has a notch that serves as a space 70S for accommodating the FPC connector. That is, the second cover member 70 has a re-entrant corner 70k in the first wall portion 71 and the second wall portion 72, which is connected to the third wall portion 73 and the fourth wall portion 74. Accordingly, the fourth wall portion 74 is divided into two parts at the center in the Y-axis direction. The third wall portion 73 is divided into two parts in the X-axis direction at a position adjacent to the fourth wall portion 74.

The wall surface 79 of the second cover member 70 faces the area R3 of the outer side surface 20sA and is in contact with the outer side surface 20sA. In the illustrated example, the first wall portion 71 and the second wall portion 72 have a notch-shaped portion 78 in a vicinity of the fourth wall portion 74 so as to avoid interference with the end of the additional member 50. For example, when viewed from the Z-axis direction, the notch-shaped portion 78 connects the wall surface 79 and the fourth wall portion 74 at an angle, and is formed so that the wall surface 79 in the vicinity of the fourth wall portion 74 is separated from the outer side surface 20sA. As an example, when the additional member 50 is formed by injection molding, resin may overflow from the main body of the additional member 50 along the outer side surface 20sA, in which case the overflowing resin may be accommodated in the space formed by the notch-shaped portion 78.

The third cover member 80 has the same basic structure as the first cover member 60 and the second cover member 70. That is, the third cover member 80 includes a first wall portion 81 and a second wall portion 82 that face each other in the Z-axis direction, a third wall portion 83 that extends in the X-Z plane to connect the first wall portion 81 and the second wall portion 82, and a fourth wall portion 84 and a fifth wall portion 85 that extend in the Y-Z plane to connect the first wall portion 81, the second wall portion 82, and the third wall portion 83 and face each other in the X-axis direction (see FIG. 1). The third cover member 80 in one example has a substantially rectangular shape when viewed from the Z-axis direction, and has a flat end surface 89 facing the outer side surface 20sB. This end surface 89 may be in contact with the outer side surface 20sB over the whole area in the X-axis direction. The corners connecting the wall portions may be chamfered in any of the X-axis direction, the Y-axis direction, and the Z-axis direction. The third cover member 80 may be divided into multiple parts.

The first cover member 60, the second cover member 70, and the third cover member 80 may restrict movement of the module main body 1A in at least one of the X-axis direction and the Y-axis direction. The first cover member 60, the second cover member 70, and the third cover member 80 may be fixed to the module main body 1A. For example, the sealing body 29 of the module main body 1A may have a projection or a recess with which the first cover member 60, the second cover member 70, and the third cover member 80 are engaged. Furthermore, the first cover member 60, the second cover member 70, and the third cover member 80 may be fixed to the module main body 1A by adhesive or the like.

Next, the linear expansion coefficient of each component will be described. The linear expansion coefficient of the sealing body 29 made of resin is greater than the linear expansion coefficient of the electrode stack 10 including the current collector 15 made of a metal foil or the like. In one example, the linear expansion coefficient of the sealing body 29 may range from approximately 6 × 10⁻⁵ to approximately 25 × 10⁻⁵ [1/°C], and the linear expansion coefficient of the electrode stack 10 may range from approximately 2.0 × 10⁻⁵ to approximately 2.5 × 10⁻⁵ [1/°C]. Since the proportion of the sealing body 29 in the module main body 1A is small, the linear expansion coefficient of the module main body 1A may be considered to be equal to the linear expansion coefficient of the electrode stack 10.

In one example, a length L1 of the module main body 1A along the X-axis direction may range from approximately 700 mm to approximately 1800 mm, a length L2 of the module main body 1A along the Y-axis direction may range from approximately 900 mm to approximately 2000 mm, a length L3 of each of the first cover member 60 and the second cover member 70 along the Y-axis direction may range from approximately 5 mm to approximately 100 mm, and a length L4 of the third cover member 80 along the Y-axis direction may range from approximately 5 mm to approximately 60 mm. The length of the third cover member 80 along the X-axis direction may be equal to the length L1 of the module main body 1A along the X-axis direction. Furthermore, the length from the fourth wall portion 64 of the first cover member 60 to the fifth wall portion 75 of the second cover member 70 may be equal to the length L1 of the module main body 1A along the X-axis direction. That is, both ends of the cover member 60A and both ends of the module main body 1A may be positioned substantially at the same location in the X-axis direction at room temperature. Furthermore, when the first cover member 60 and the second cover member 70 expand due to an increase in temperature, the connector unit 30 prevents the first cover member 60 and the second cover member 70 from expanding toward each other, thereby allowing the first cover member 60 and the second cover member 70 to expand away from each other (outward along the X-axis direction).

The exterior film 93 in one example is a laminate film, as described above. For example, the resin layers 93b and 93c of the exterior film 93 may be made of the same resin as the sealing body 29. The linear expansion coefficient of the exterior film 93 having the metal layer 93a, such as an aluminum layer, as an intermediate layer is close to the linear expansion coefficient of the metal layer 93a. In one example, the linear expansion coefficient of the exterior film 93 may range from approximately 2 × 10⁻⁵ to approximately 3 × 10⁻⁵ [1/°C]. In the present embodiment, the linear expansion coefficient of the exterior film 93 may be substantially equal to the linear expansion coefficient of the module main body 1A.

The cover member 60A is designed to have a linear expansion coefficient smaller than that of the sealing body 29. In one example, the cover member 60A may have a linear expansion coefficient that causes a volume change, which is not enough to damage the exterior film 93, when a temperature change of about 100 °C occurs. For example, if the cover member 60A expands due to a temperature change, the expanded cover member 60A may press the exterior film 93, causing stress in the exterior film 93. If the stress generated in the exterior film 93 exceeds the breaking strength of the exterior film 93, the exterior film 93 may be damaged. Accordingly, the cover member 60A may have a linear expansion coefficient such that the stress generated in the exterior film 93 does not exceed the breaking strength of the exterior film 93.

The stress (σ) generated in the exterior film 93 is expressed as the product of the strain (ε) generated in the exterior film 93 and the Young's modulus (E) of the exterior film 93. That is, the following equation (1) holds true. $σ = Eε$ Equation (1)

The following will describe a model in which the third cover member 80 expanding in the longitudinal direction (X-axis direction) generates stress in the exterior film 93. When the exterior film 93 is sealed, the length of the third cover member 80 is substantially equal to the length of the exterior film 93 in the X-axis direction. Accordingly, the strain (ε) generated in the exterior film 93 is expressed as the difference between the amount of expansion of the exterior film 93 and the amount of expansion of the third cover member 80. That is, the strain (ε) is expressed as the product of a temperature change T and a difference (αC - αF) between the linear expansion coefficient αC of the third cover member 80 and the linear expansion coefficient αF of the exterior film 93. That is, the following equation (2) holds true. $ε = T \left(αC-αF\right)$ Equation (2)

In this case, since the stress (σ) generated in the exterior film 93 is expressed as σ = ET(αC - αF) by referring to the above equations (1) and (2), the condition required for the linear expansion coefficient αC of the third cover member 80 so that the stress (σ) generated in the exterior film 93 does not exceed the breaking strength of the exterior film 93 is expressed by the following inequality (3), where F is the breaking strength of the exterior film 93. $αC \leq \left(F/\left(ET\right)\right) + αF$ Inequality (3)

For example, if the linear expansion coefficient, Young's modulus, and breaking strength of the exterior film 93 are 2.5 × 10⁻⁵ [1/°C], 33,000 [MPa], and 75 [MPa], respectively, the linear expansion coefficient of the third cover member 80 may be approximately 5.0 × 10⁻⁵ [1/°C] or less. That is, the difference in the linear expansion coefficient between the third cover member 80 and the exterior film 93 may be 2.5 × 10⁻⁵ [1/°C] or less.

The cover member 60A in one an example may be formed from a mixed material of resin as a main material and a filler that reduces the linear expansion coefficient. In other words, it is sufficient that a linear expansion coefficient of the cover member is lower than that of the sealing body. The resin as the main material of the cover member may be any resin material, and may be a thermoplastic resin, such as general-purpose plastic, general-purpose engineering plastic, or super engineering plastic, or a thermosetting resin. The resin may be polyphenylene sulfide. The resin may be polyamide, polypropylene, or the like. The resin may be a polymer alloy in which a plurality of polymers, such as modified polyphenylene ether, is mixed. The resin may be resin whose copolymer properties change depending on the ratio of monomers, such as an acrylonitrile styrene resin. In one example, the linear expansion coefficient of the resin as the main material of the cover member 60A may be approximately 2.5 × 10⁻⁵ [1/°C].

The filler may be any material that reduces the linear expansion coefficient of the cover member 60A. The filler material may be a metal compound, an inorganic compound, or an organic compound. The shape of the filler is not particularly limited. For example, the shape of the filler may be spherical, needle-like, fibrous, or plate-like. When the filler has an oriented shape, such as a needle like shape or a fibrous shape, the shape of the filler may be anisotropic, extending in a direction intersecting the longitudinal direction. In the cover member 60A, the longitudinal direction of the filler may be oriented in the X-axis direction. The filler may be an inorganic material, such as glass fiber, glass beads, carbon fiber, alumina powder, silica, or the like. In one example, the filler may be mixed with the main material in an amount of approximately 20 wt% to approximately 60 wt%. In one example, the linear expansion coefficient of the filler may be approximately 0.3 × 10⁻⁵ [1/°C]. In one example, the linear expansion coefficient of the cover member 60A may range from approximately 2.3 × 10⁻⁵ to approximately 5.0 × 10⁻⁵ [1/°C].

As described above, the power storage module 1 in one example includes: the electrode stack 10 in which the plurality of electrodes is stacked in the Z-axis direction, the electrodes each including the current collector 15; the sealing body 29 disposed on the electrode stack 10 so as to surround the electrode stack 10 when viewed from the Z-axis direction, the sealing body 29 sealing the plurality of internal spaces each formed between the electrodes adjacent in the Z-axis direction; the exterior film 93 that accommodates the electrode stack 10 and the sealing body 29; and the cover member 60A interposed between the side surface of the sealing body 29 extending in the Z-axis direction and the exterior film 93. The linear expansion coefficient of the cover member 60A is smaller than the linear expansion coefficient of the sealing body 29.

In the above-described power storage module, the cover member 60A, which has a linear expansion coefficient smaller than that of the sealing body 29, is disposed between the sealing body 29 and the exterior pack 90, thereby reducing the influence of the sealing body 29 and the cover member 60A as the component on the exterior pack 90. That is, since the linear expansion coefficient of the cover member 60A is smaller than the linear expansion coefficient of the sealing body 29, the difference in the thermal expansion coefficient between the cover member 60A and the exterior pack 90 is smaller than the difference in the thermal expansion coefficient between the sealing body 29 and the exterior pack 90. Accordingly, when a temperature change occurs in the power storage module 1, the influence of the expansion of the cover member 60A on the generation of stress in the exterior pack 90 is relatively small. This allows damage to the exterior pack, which is caused by thermal expansion of the sealing body 29 due to a temperature change, to be suppressed. That is, the thermal shock resistance of the power storage module 1 is improved.

The cover member 60A in one example may contain the resin material and the filler, and the linear expansion coefficient of the filler may be lower than the linear expansion coefficient of the resin material. This configuration allows the thermal expansion coefficient of the cover member 60A, which is mainly made of a resin material, to be reduced.

The cover member 60A in one example may extend along the X-axis direction. The filler may be an inorganic material having a needle-like or fibrous shape, and may be oriented along the X-axis direction within the cover member 60A. This configuration allows efficient reduction of the linear expansion coefficient in the X-axis direction since the filler is oriented in the X-axis direction. This allows the mixing ratio of the filler to the main material to be reduced.

The difference between the linear expansion coefficient of the cover member and the linear expansion coefficient of the exterior pack in one example may be 2.5 × 10⁻⁵ [1/°C] or less. This configuration allows reduction of the difference between the amount of the dimensional change of the cover member 60A and the amount of the dimensional change of the exterior film 93 when a temperature change occurs. For example, this configuration suppresses damage to the exterior film 93 by the expanded cover member 60A even if a temperature change of about 100 °C is expected (for example, from -40 °C to 60 °C). In addition, in the present embodiment, the difference between the linear expansion coefficient of the cover member and the linear expansion coefficient of the power storage module body is also small, thereby suppressing variation in the amount of the dimensional change of the power storage module body and the cover member, which are the main components arranged inside the exterior film.

Although examples of the embodiments of the present disclosure have been described above with reference to the drawings, the present disclosure is not limited to the above embodiments.

In the above embodiment, an example in which the expansion coefficient of the cover member 60A is smaller than the expansion coefficient of the sealing body 29 is shown, where the expansion coefficient of the cover member 60A is larger than the expansion coefficient of the exterior film 93, but the expansion coefficient of the cover member 60A may be smaller than the expansion coefficient of the exterior film 93.

The linear expansion coefficient of the exterior pack 90 in one example may be equal to or less than the linear expansion coefficient of the cover member 60A. The linear expansion coefficient of the cover member 60A may be closer to the linear expansion coefficient of the exterior pack 90 than to the linear expansion coefficient of the sealing body 29. For example, the linear expansion coefficient of the cover member 60A may be substantially equal to the linear expansion coefficient of the exterior film 93. Since the cover member 60A and the exterior film 93 undergo similar degree of expansion and contraction, this configuration allows stress generated in the exterior film 93 due to the expansion and contraction of the cover member 60A to be suppressed. As used herein, the phrase "the linear expansion coefficient of the cover member 60A may be substantially equal to the linear expansion coefficient of the exterior film 93" means that a difference in expansion between the cover member 60A and the exterior film 93 is substantially small so as not to affect the durability of the exterior film.

The outer side surfaces 20sC and 20sD may be covered by a cover member having a configuration similar to that of the cover member 60A. In this configuration, the outer side surfaces 20s are respectively covered by four cover members that cooperate to form a rectangular frame.

In addition, although an example has been shown in which the outer side surface 20sA is covered by the first cover member 60 and the second cover member 70 that are formed separately, for example, the first cover member 60 and the second cover member 70 may be formed integrally. In this configuration, a hole, a notch, or the like may be provided to expose the FPC to the outside of the cover member.

### REFERENCE SIGNS LIST

1 power storage module
1A module main body
10 electrode stack
11 bipolar electrode (electrode)
12 positive terminal electrode (electrode)
13 negative terminal electrode (electrode)
15 current collector
29 sealing body
60A cover member
60 first cover member
70 second cover member
80 third cover member
90 exterior pack
S internal space

## Claims

1. A power storage module comprising:
an electrode stack in which a plurality of electrodes is stacked in a first direction, the electrodes each including a current collector;
a sealing body disposed on the electrode stack so as to surround the electrode stack when viewed from the first direction, the sealing body sealing a plurality of internal spaces each formed between the electrodes adjacent in the first direction;
an exterior pack that accommodates the electrode stack and the sealing body; and
a cover member interposed between a side surface of the sealing body extending in the first direction and the exterior pack, wherein
a linear expansion coefficient of the cover member is smaller than a linear expansion coefficient of the sealing body.

2. The power storage module according to claim 1, wherein
the cover member contains a resin material and a filler, and
a linear expansion coefficient of the filler is lower than a linear expansion coefficient of the resin material.

3. The power storage module according to claim 2, wherein
the cover member extends along a second direction intersecting the first direction, and
the filler is an inorganic material having a needle-like or fibrous shape, and is oriented along the second direction within the cover member.

4. The power storage module according to any one of claims 1 to 3, wherein
a linear expansion coefficient of the exterior pack is equal to or less than the linear expansion coefficient of the cover member, and
the linear expansion coefficient of the cover member is closer to the linear expansion coefficient of the exterior pack than to the linear expansion coefficient of the sealing body.

5. The power storage module according to claim 4, wherein
a difference between the linear expansion coefficient of the cover member and the linear expansion coefficient of the exterior pack is 2.5 × 10⁻⁵ [1/°C] or less.
